# EUROPEAN PATENT APPLICATION

(11) **EP 2 403 226 A1**
(43) Date of publication of application: **04.01.2012**
(21) Application number: 10075484.5
(22) Date of filing: 21.09.2010
(51) Int. Cl.: H04M 15/00, H04M 15/28, H04L 12/14

(54) **Method for real-time monitoring of packet-based telecom services, and corresponding server and client device**

(30) Priority: 30.06.2010 US 360170 P
(71) Applicant: Runs NV, 8820 Torhout (BE)
(72) Inventor: Luc Verlinde, 8820 Torhout (BE)
(74) Representative: Plas, Axel Ivo Michel

(57) **Abstract**

A method for real-time monitoring of usage of packet-based telecom services comprises:
- communicating from a server (116) to a client (121, 122, 123) rate information;
- local metering of usage of the packet-based telecom services in the client (121, 122, 123);
- estimating in the client (121, 122, 123) usage costs based on the local metering and the rate information; and
- displaying the usage costs (124, 125, 126) in the client (121, 122, 123);
- sending from a server (116) to the client (121, 122, 123) asynchronous usage notifications (151) indicative for network-metered usage of the packet-based telecom services; and
- adapting in the client (121, 122, 123) the usage costs (124, 125, 126) based on the asynchronous usage notifications (151).

## Description

### Field of the Invention

The present invention generally relates to real-time rate notification, i.e. advice of charge, and usage notification for packet-based telecommunication services. Rate notification allows consumers and intelligent applications to determine the price of a telecom service in advance of consuming it, as long as the notified rate is accurate in all circumstances: fixed access connectivity via a trusted non-3GPP or non-trusted non-3GPP network, mobile access via a 3GPP or Third Generation Partnership Program subscription, roaming, usage within or outside national volume bundle, presence within or outside a home zone, consuming the service(s) in the busiest hours or off-peak, etc. Accurate and real-time usage notifications enable consumers, consumer groups such as families or enterprises, resellers, transport service providers and intelligent applications, client- and/or network-based, to monitor the total, e.g. monthly amount spent and remaining amount towards a pre-set usage limit: a threshold, e.g. 2 Gbytes, 50 €, 20 points, 70 seconds of viewing time, etc. Multiple and granular usage counters and spending limits can be defined: by device, by group of devices, by service or application, by access network (3G or Third Generation vs. WLAN or Wireless Local Area Network), by location (femtocell, home zone, national, roaming in EU, roaming outside of EU), etc. The monetary or non-monetary unit for each rate or usage notification should be meaningful to the consumer or application. This allows consumers and client-based and network-based applications to adapt their behaviour or consuming pattern and optimize their total expenses. The present invention will be useful in client devices such as smartphones, laptops, tablets, netbooks, desktops, car computers, digital TV receivers, media players, portable or fixed game consoles, still image and video cameras, etc., and may be integrated in software clients such as mobile Apps, Java widgets, connection managers, browsers, media players, games, operating systems, desktop software, etc. It may also be used by network-based applications to select the best, e.g. the cheapest moment at which to transmit pending updates, i.e. new data to the clients.

### Background of the Invention

Mobile data service providers are offering packet-based telecom services to client devices of mobile customers using a wide variety of pricing schemes like volume-based charging, typical for mobile access, throughput speed-based charging,typical for fixed access, or content-based charging, time-based charging of for instance streaming services, flat-rate access to certain applications, etc. In addition, these mobile data service operators are offloading mobile data traffic to Wireless LANs or femtocells, thereby creating further uncertainty on the rates and total usage paid by the end consumer using a certain client device and access technology to access a specific service, from a certain location.

In case of roaming, i.e. situations where the mobile user accesses services from a location that is not covered by the network of its mobile operator and where the mobile user consequentially uses resources in a so called visited network, i.e. the network of a mobile operator different from its home mobile operator, European regulation has imposed a usage limit of 50 Euro (by default) and a mandatory warning of the consumer when 80 % of the usage limit is reached. The method for warning the consumer has not been specified by the European regulator. The consumer may for instance be warned through a Short Message Service (SMS), e-mail (SMTP) or by the HyperText Transfer Protocol (HTTP) redirect function.

Today, accurate service usage metering already takes place in the network, either inside a mobile gateway or in a deep packet inspection node for mobile packet-based telecom services. The 3GPP Policy & Charging Control (PCC) framework for instance defines a Policy & Charging Rules Function (PCRF) installing charging rules and monitoring usage in a Policy Control & Enforcement Function (PCEF). Other frameworks exist for online usage monitoring of voice, messaging and content services. The accurate data usage monitoring in the network is used by the mobile operators for online and offline charging purposes and/or fair usage policy enforcement.

In order to inform the end customer on its usage of data services, non-real-time solutions exist. Basic solutions were built informing the end customer via SMS, e-mail or HTTP redirect function whenever the 80 % roaming limit and 100 % roaming limit imposed by EU regulation is reached. SMS notification for voice and GPRS services is for instance described in *European Patent Application* EP 2 139 219 *entitled "Stimulation of Use of Telephony Networks" from applicant Alcatel Lucent.* More advanced non-real-time solutions, e.g. implemented in certain smartphone applications, establish a connection to the mobile service provider's selfcare webpage. There, usage information for data, messaging and voice may be available. An example of such non-real-time usage monitoring application for smartphones is *Bjango's Consume* described for instance at the following Internet URL:
http://bjango.com/apps/consume/

Non-real-time solutions for data service usage monitoring inherently do not inform the customer on his/her instantaneous usage. They rather provide an offline, delayed overview of volumes and costs and are therefore an inaccurate instrument for the customer desiring knowledge on its actual, instantaneous usage, even online during usage of the service(s).

For voice based services, e.g. GSM services, price information (AoC-I) and usage information (AoC-C) as metered in the network can be supplied to the client device through the Advice of Charge (AoC) supplementary service. This service however is limited to GSM services and was rarely deployed. In a similar solution known from *Huawei Technologies' patent application* EP 1 914 974 *entitled "Method for Real-Time Displaying Telephone Fee at the Terminal",* costs for telephone calls can be displayed in real-time. Just like with AoC, these costs are calculated centrally in the network and transmitted to the client terminal for display.

In summary, different solutions exist for real-time cost awareness by the user of voice services. These solutions are restricted to voice, have gained little penetration in the market, and put a burden on network resources since they push centrally calculated cost or usage information towards the client device.

The closest prior art solution is described in *European Patent Application* EP 2 110 983 *from Teliasonera, entitled "Providing a Roaming Service to a User Terminal in a Communications System".* In the solution of Teliasonera, the roaming user is initially notified on the charging information of the visited (roaming) network. Local metering in the client terminal then enables the user to get a real-time indication of the costs for mobile data services when roaming.

Since Teliasonera relies only on local metering for real-time cost calculation, the cost/usage information displayed to the user will be rather inaccurate. Metering on the client device will be less accurate and roaming rate plans will be more difficult to maintain and interpret in the client devices.

The state of the art further entails a number of solutions for semi-real-time usage monitoring of data services and/or real-time usage notification that is account-related, i.e. either prepaid account or postpaid account related. The semi-real-time solutions are typically based on polling. The client device polls a server and the server responds by transmitting network metered usage information. A disadvantage thereof is that the client needs to poll the server periodically or on instruction of the user. As a consequence, there is no real-time cost or usage information available in the terminal device at any time instant. Real-time balance notification for prepaid wireless packet data services is described for instance in *US Patent Application US2004*/*0137874 from Qualcomm, entitled "Method and Apparatus Providing User with Account Balance Notification of Prepaid Wireless Packet Data Services".* The management of account related activity that is permitted when predetermined usage restriction levels are reached is described in another *US Patent Application, US2004*/*0148237 from mSAFE Ltd, entitled "Real Time Management of* a *Communication Network Account".* These real-time usage notification services all have the severe drawback they are tied to prepaid or postpaid account dependent thresholds, rather than arbitrary thresholds specified by the consumer, consumer group, reseller or application. The granularity of these thresholds is also inadequate, i.e. no difference is made between national, EU roaming or non-EU roaming.

At last, *US Patent Application US2001*/*0027449 from inventor C. A. Wright entitled "Instantaneous Internet Charging"* describes real time notifying a user of Internet services on usage, rate, and charges. The usage is metered in the network and notified to the terminal where it can be used to control further usage.

Although Wright describes a solution that enables display of accurate real-time usage information for data services, the network metered rate information must be sent to the client on each smallest incremental unit consumed in order to sustain the real-time aspect. As a consequence, Wright's solution has a severe impact on the network resources due to excessive traffic of usage measurements from the servers to the clients.

It is an objective of the present invention to disclose a method, server and client for real-time monitoring the usage of packet-based telecom services, including but not restricted to packet-switched data services, that overcomes the various disadvantages of the above quoted prior art solutions. In particular, it is an objective to disclose such method, server and client that enable accurate real-time display of usage information, independent of prepaid/postpaid accounts and without imposing excessive traffic of network metered usage information through the network.

### Summary of the Invention

According to the present invention, the above mentioned objectives are realized through a method for real-time monitoring of usage of packet-based telecom services as defined by claim 1, the method comprising:
- communicating from a first server to a client rate information;
- local metering of usage of the packet-based telecom services in the client;
- estimating in the client usage costs based on the local metering and the rate information;
- displaying the usage costs in the client;
- sending from a second server to the client asynchronous usage notifications indicative for network-metered usage of the packet-based telecom services; and
- adapting in the client the usage costs based on the asynchronous usage notifications.

Thus, the method for real-time usage monitoring according to the current invention intelligently combines local usage metering in the client device and local usage cost estimation with an asynchronous process of more accurate updates resulting from network metering. The initial communication may for instance contain the unit price for packet-switched data services when roaming. Thanks to the initial communication of rate information from the first server, the client device can estimate usage costs and display a smoothly increasing real-time usage counter for the user. Further, there is no need for the client to poll the second server periodically or synchronously since the second server is assumed to respond asynchronously to a pending request, for instance as soon as a significant slice of usage has been measured in the network. The significance of the slice is e.g. related to its monetary value in the circumstances in which it is consumed, e.g. while roaming. The second server may also adapt the periodicity of its usage notifications to the type of access network: foreign Visited Public Mobile Network (VPMN), Home PMN (HPMN), femtocell, trusted Non-3GPP access, untrusted Non-3GPP access, in decreasing order of the delivery cost. Thanks to the asynchronous process of intermediate usage notifications metered by a network device, e.g. a gateway, node or server, accurate and significant usage display can be guaranteed. These asynchronous usage notifications, either monetary or non-monetary, are more accurate than the local estimation (based on local metering and initial rate notifications) and will consequently be used to correct the local usage cost estimations. The initial rate notification and local usage measurements enable to reduce the traffic of usage measurements, an important aspect when the rate and usage are displayed on the mobile client device itself under cellular coverage. On the other hand, the asynchronous process of network metered usage notifications ensures accurate usage display without a need for polling.

It is noticed that the usage costs may be expressed by any relevant unit for the application, server or user, e.g. time spent, volume streamed, etc., and consequently are not restricted to a monetary unit. It is also noticed that, in addition to the asynchronous usage notifications, the second server or network may send other information to the client device, such as warnings or thresholds. Such thresholds may for instance be preconfigured by the user or fleet administrator and may be displayed by the widget or application in the client device that is also responsible for displaying the usage costs. It is further noticed that the first server and second server named in the claims may in certain embodiments of the current invention represent one and the same server but alternatively may represent different servers, gateways or nodes in different networks. Packet-based telecom services comprise packet-switched data transfer, messaging, streaming, or content downloading.

It is also noticed that the current invention is not restricted to any particular choice of technology used for the asynchronous notification process. The protocol used for the transmission of rate information and asynchronous usage notifications may for instance be XML (Extensible Markup Language), HTTP (HyperText Transfer Protocol), Java, SMTP (Simple Mail Transfer Protocol), etc. The client software needed thereto may be implemented in a Java widget, in the connection manager, a browser, icon software, etc. The IP connectivity access network over which the data service(s) is/are delivered may be mobile or fixed, cellular or wireless, untrusted or trusted.

The rate information and usage notifications may be stored in local (volatile or non-volatile) memory for future use, e.g. when the client device is not connected to the network. This storage process may be manually triggered or automatic. It is also noted that the time frame between the initial rate information communication and the asynchronous usage measurement notifications is unspecified. Both may occur during a single data session or the rate information may have been communicated in a previous data session or in advance by a download, update or pre-configuration mechanism, or the like.

Optionally, as defined by claim 2, the method for real-time monitoring of usage of packet-based telecom services according to the current invention may further comprise:
- setting in the client and/or in the second server one or more usage thresholds that are independent of a pre-paid or post-paid account.

Indeed, such usage thresholds, independent of pre-paid or post-paid accounts enable the user and/or network to take measures when certain usage thresholds are exceeded.

Further optionally, as defined by claim 3, the one or more thresholds may be user-selectable.

Thus, the pre-paid and post-paid account independent usage thresholds may be changed by the user at any point in time. Such changes may optionally be subject to an authentication and/or authorization mechanism.

Further optionally, as defined by claim 4, the method for real-time monitoring of usage of packet-based telecom services according the current invention may further comprise:
- controlling uplink usage by the client as soon as the usage costs exceed a first threshold out of the one or more thresholds.

This way, by restricting uplink traffic on a roaming client device when a first usage threshold is reached or exceeded, the connectivity to the home network can be maintained even if a large amount of the client's service pack has been consumed. The subscriber (end user) or fleet manager can then increase the threshold, may purchase a larger volume pack, or may take other appropriate actions in order to re-allow unrestricted uplink traffic on the client. Controlling uplink usage may include completely blocking uplink traffic, selectively blocking uplink traffic, policing, shaping, re-directing, extending uplink traffic, etc. The uplink usage restrictions may be configured in the client software, connection manager, operating system, device driver, modem, SIM (Subscriber Identity Module) card, or any other component of the mobile or fixed client device by local decision of the user or by instruction from the usage metering server in the server, e.g. a PCRF (Policy Charging & Rules Function) server or OCS (Office Communications Server).

Also optionally, as defined by claim 5, the method for real-time monitoring of usage of packet-based telecom services according to the current invention may further comprise:
- controlling downlink usage upon instruction of the client as soon as the usage costs exceed a second threshold out of the one or more thresholds.

Indeed, alternatively or in addition to uplink traffic control, the user may for instance click a hardware or software button on the client device (e.g. a "Pause" or "Play" button) in order to send a request to the second, usage-metering server, e.g. a PCRF server, for controlling downlink data traffic on the responsible network device, e.g. a PCEF (Policy Charging Enforcement Function) server. Controlling downlink usage may include completely blocking downlink traffic, selectively blocking downlink traffic, policing, shaping, unblocking downlink traffic, etc.

According to another optional aspect of the method for real-time monitoring of usage of packet-based telecom services according to the current invention, defined by claim 6, the usage costs may be displayed with respect to a third threshold out of the one or more thresholds.

This way, the margin of usage vis-à-vis a certain threshold is visualized accurately in real-time. It is noticed here that the third threshold may correspond to the first threshold that is used to control uplink traffic or the second threshold that is used to control downlink traffic.

Following a further optional aspect of the method for real-time monitoring of usage of packet-based telecom services according to the current invention, usage may entail usage of packet-based telecom services by plural clients.

Thus, the rate information and asynchronous usage notifications may be communicated for a single client device, for a subscriber potentially owning multiple client devices and subscribing to various telecom services, for a group of subscribers like all members of a family or enterprise, for a reseller, for a service provider or a platform administrator, etc. depending on the level whereat the user is interested to view usage. This allows for instance to display usage costs of devices that do not have a display, like 3G or Third Generation routers, MiFi devices, i.e. mobile WiFi hotspots, or machine-to machine communication devices.

As is further specified by claim 8, the plural clients may form part of:
- a family;
- a company; or
- an organisation.

Any skilled person will appreciate that the above are only examples and the current invention is obviously not restricted to a particular relation that exists between client devices whose usage costs are monitored together using the current invention. An advantage of fleet based monitoring of usage costs is that limits can be set not only at device level but also at fleet level, e.g. for all devices of a family, enterprise, organization, reseller, etc. This would allow mobile data service providers to market larger service packs covering the usage of packet-based telecom services by a larger number of client devices.

Still optionally, as defined by claim 9, the usage costs in the method for real-time monitoring of usage of packet-based telecom services according to the current invention, may be limited to:
- one or more packet-based telecom services;
- one or more geographic areas;
- one or more access networks;
- one or more accounts; or
- a combination thereof.

Indeed, the usage costs and limits displayed to the user may be restricted to a particular data service, e.g. a streaming service, to a particular territory, e.g. the country wherein the user is roaming, a particular access network, e.g. GPRS, Wideband Code Division Multiple Access (W-CDMA), Long Term Evolution (LTE), WLAN, etc., a particular account, e.g. a prepaid account with a mobile data service provider, or any logical combination of the foregoing.

According to yet another optional aspect of the current invention, defined by claim 10, usage costs are expressed in a service-relevant unit.

This service-relevant unit may be monetary, e.g. the amount of Euros spent since activation of a bundle or pack, or non-monetary, e.g. the amount of Megabytes downloaded, the time spent on a streaming service, etc.

In addition to a method for real-time monitoring of usage of packet-based telecom services as defined by claim 1, the current invention also relates to a corresponding server enabling real-time monitoring of usage of packet-based telecom services as defined by claim 11, the server comprising:
- means for communicating rate information to a client thereby enabling the client to estimate usage costs based on local metering and the rate information; and
- means for sending to the client asynchronous usage notifications indicative for network-metered usage of the packet-based telecom services, thereby enabling the client to adapt the usage costs based on the asynchronous usage notifications.

Further, the current invention also relates to a corresponding client device able to real-time monitor usage of packet-based telecom services as defined by claim 12, the client device comprising:
- means for receiving rate information from a first server;
- means for local metering of usage of the packet-based telecom services;
- means for estimating in the client usage costs based on the local metering and the rate information;
- means for displaying the usage costs;
- means for receiving from a second server asynchronous usage notifications indicative for network-metered usage of the packet-based telecom services; and
- means for adapting in the client the usage costs based on the asynchronous usage notifications.

### Brief Description of the Drawings

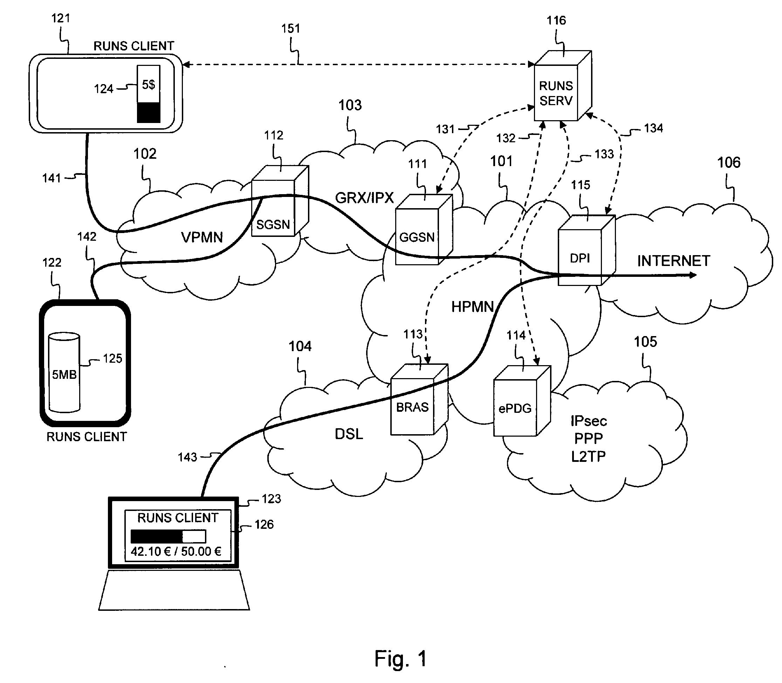

Fig. 1 illustrates an embodiment of the method, client and server according to the present invention.

### Detailed Description of Embodiment(s)

Fig. 1 shows three client devices according to the present invention, 121, 122 and 123, and a server 116 according to the present invention. Fig. 1 further shows the home public mobile network, HPMN or 101, of the first and second client devices, 121 and 122, a visited public mobile network, VPMN or 102, wherein the first and second client, 121 and 122, reside, and the serving GPRS support node, SGSN or 112, responsible for delivery of data packets from and to the mobile stations within the geographical area service area covered by the visited public mobile network 102. Fig. 1 further shows the GPRS roaming exchange / IP exchange network 103 (GRX/IPX) responsible for exchange of data packets between the respective mobile operators of the home public mobile network 101 and the visited public mobile network 102. When the VPMN 102 is equal to the HPMN 101, no GRX 103 is involved. It is noticed that application of the present invention does not assume a particular network architecture. This patent application in other words is independent of the 3GPP release of the core network, i.e. the invention could be deployed for instance in a 3GPP Evolved Packet Core (SAE Core Network). The third client 123 is coupled via a fixed DSL access network 104 and the home public mobile network 101 to the Internet 106. Fig. 1 also shows the broadband remote access server, BRAS or 11, of the DSL access network 104, and the deep packet inspection node, DPI or 115, at the edge between the home public mobile network 101 and the Internet 106. The BRAS is one embodiment of a BNG (Broadband Network Gateway), which is defined by the BroadBand Forum (BBF) and may be used to aggregate user sessions in various trusted non-3GPP access networks like DSL, cable, or fiber based access networks. It is noticed however that this patent application does not assume or require a particular access technology. At last, Fig. 1 shows an IPsec (IP security) / PPP (Point-to-Point Protocol) / L2TP (Layer 2 Tunnelling Protocol) network with an evolved packet data gateway, ePDG or 114. The ePDG is defined by 3GPP for access from untrusted non-3GPP access networks. The Policy and Charging Enforcement Functions (PCEF) in BRAS 113, DPI node 115, ePDG node 114 and the gateway GPRS support node, GGSN or 111, between the home public mobile network 101 and the GRX/IPX network 103, are coupled with the server 116 according to the current inventions via respective signalling channels 131, 134, 133 and 131. The RUNS server 116 further is coupled with the clients 121, 122 and 123. One of the channels, i.e. the signalling channel 151 between the first client 121 and the RUNS server 116, is drawn in Fig. 1. The clients 121, 122 and 123 are using packet-based telecom services through respective connections 141, 142 and 143 to external Packet Data Networks (PDN) such as the Internet. The costs related to their respective data packet service usage are displayed as is indicated by 124, 125 and 126 in Fig. 1 respectively.

Fig. 1 illustrates the rate and usage notification service, abbreviated "RUNS", according to the present invention for fixed and mobile data transfer. The method, client software in the RUNS clients 121, 122 and 123, the server software in RUNS server 116 and the data model enable to notify users in real-time about the rate and usage of packet-based telecom services, i.e. packet-switched 3GPP and non-3GPP data, messages, streaming services or content-based services. Thereto, an initial communication of the rate, e.g. the unit price, is followed by an asynchronous process of intermediate usage notifications based on measurements in the network, either monetary or non-monetary. In Fig. 1, the initial communication and asynchronous usage notifications are both received from the RUNS server 116.

The embodiment of the RUNS method illustrated by Fig. 1 is a service initially informing the users of clients 121, 122 and 123 of the rates of packet-based telecom services applicable while roaming in VPMN 102 for clients 121 and 122 or applicable when residing in the DSL access network 104 for client 123. The initial communication is followed by an asynchronous process of intermediate usage notification containing measurements metered by a network device, e.g. a gateway, node and/or server like GGSN 111, BRAS 113, ePDG 114 or DPI 115.

Packet-based telecom services in the context of this patent application means any service or application delivered over a fixed or mobile IP connectivity access network (IP-CAN). In addition, the rate and usage for circuit-switched services and SMS may be displayed on the RUNS clients or devices 121, 122 and 123. The way these services are metered is not relevant and extends beyond the scope of this patent application.

Since the initial rate(s) is/are known to the client devices actually consuming the service(s), these client devices 121, 122 and 123 can display a smooth counter, i.e. 124, 125 and 126, to the user. This way, the initial rate communication allows reducing the traffic of later usage measurements, an important aspect when the rate and usage are displayed on the mobile data device itself, under cellular coverage.

If the initial rate is known to a device not consuming or only consuming part of the actual packet-switched telecom service, local measurements make no sense and the usage counter will only be increased when new usage measurements are received from the RUNS server.

A key characteristic and differentiator of the RUNS method illustrated by Fig. 1 is that the client devices 121, 122 and 123 do not need to poll the server 116 periodically. The server 116 responds to a pending request as soon as a significant slice of usage has been measured in the network and has been reported to the server 116, e.g. by GGSN 111, BRAS 113, ePDG 114 or DPI 115. The server 116 in other words sends asynchronous usage notifications 151, and does not send immediate responses to periodic, synchronous requests from the clients.

The timeframe between the initial communication of the rate(s) and the asynchronous usage notifications is unspecified. Both may occur during a single data session, or the rate may have been communicated in a previous data session, or in advance by other means like for instance software download, update, pre-configuration, etc.

Once a pre-agreed usage limit has been reached, the RUNS clients 121, 122 and/or 123 may control uplink data traffic on the user device itself. Controlling may include fully blocking, selectively blocking, policing, shaping, redirecting, or extending the uplink data traffic on the user device, i.e. in the client software, connection manager, operating system, device driver, modem, subscriber identity module (SIM) or any other component of the mobile station or fixed terminal wherein the RUNS client is installed, either by local decision and/or by an instruction from the usage metering server in the network, e.g. the policy charging and rules function (PCRF) or office communications server (OCS).

When the user clicks a dedicated button on the user device, implemented as a hardware or software button, a request may be sent to the RUNS server 116 to control the downlink data traffic in a network device, e.g. a PCEF. Controlling the downlink in this context may involve fully blocking, selectively blocking, policing, shaping, unblocking, etc.

It is noticed that various technologies or protocols may be used for the asynchronous usage notification process, like for instance XML, HTTP, Java, SMTP...

The client software installed on the mobile or fixed terminals may be implemented as a Java widget, connection manager, icon, browser, etc.

The IP connectivity access network (IP CAN) over which the data service is delivered may be mobile or fixed, cellular or wireless, non-trusted or trusted.

It is further noticed that the rate and usage may be communicated for a single device, a subscriber potentially owning multiple devices and subscribing to various data packet services, a group of subscribers like family or enterprise, or even a reseller, a service provider or a platform administrator, depending on the level that the user is interested to view.

Further, the rate and usage may be communicated regarding a specific telecom or non-telecom service, a device type, an access technology, a geographic location or area, an application or application category.

The usage limit thresholds may be changed at any point in time. These changes may be subject to an authentication and/or authorization mechanism.

The rates and usage may be stored on local (volatile or non-volatile) media for future use, e.g. when the user device is not connected to the network. This storage process may be controlled manually or automatically.

Thanks to the invention, users are continuously informed in all circumstances of the exact rate and accurate usage of their packet-based telecom services. Metering in the network is more accurate than on the device and therefore adds to the accurateness of the displayed costs or usage. In addition, rate plans are easier to maintain in network servers than in user devices.

Thanks to the initial communication of the rate(s) to the RUNS clients 121, 122 and 123, these clients only need to receive additional network-metered usage notifications to correct local measurements, and the user sees a smoothly increasing usage counter. There is no need for the client to poll the server periodically (synchronously).

Usage can be monitored for data traffic on other devices than the one on which the costs and/or usage are displayed. This allows displaying the usage of devices that do not have a screen, metering devices for example.

Limits or thresholds can not only be set at the device level, but also for the usage of a personal fleet of devices, for all devices of a family, an enterprise, a reseller etc. This will allow mobile data service providers to market new, larger volume packs covering the usage of a larger number of devices.

In the mobile case, when such usage limit is reached, by restricting uplink traffic on the client device, the connectivity to the home network, e.g. in PDP context / EPS bearer, can be maintained since less or no roaming costs are incurred for uplink traffic in the VPMN, neither inter-operator roaming (i.e. wholesale) nor retail costs. The subscriber or fleet manager can then increase the limit, purchase a larger volume pack or take other actions.

The invention could be used in smart phones, laptops, tablets, netbooks, desktop computers, car computers, digital TV receivers, media players, portable or fixed gaming consoles, photo and video cameras, etc. The software clients can be implemented as or integrated in mobile Apps, Java widgets, connection managers, TV players, browsers, games, desktop software, operating systems. The invention is useful in 2G-3G-4G and future generations of cellular mobile data networks, in wireless networks (WLAN and others), in fixed broadband networks, digital TV networks, VPNs, enterprise networks, MVNE/MVNO networks, etc.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for real-time monitoring of usage of packet-based telecom services, comprising:
- communicating from a first server (116) to a client (121, 122, 123) rate information;
- local metering of usage of said packet-based telecom services in said client (121, 122, 123);
- estimating in said client (121, 122, 123) usage costs based on said local metering and said rate information; and
- displaying said usage costs (124, 125, 126) in said client (121, 122, 123),
**CHARACTERIZED IN THAT** said method further comprises:
- sending from a second server (116) to said client (121, 122, 123) asynchronous usage notifications (151) indicative for network-metered usage of said packet-based telecom services; and
- adapting in said client (121, 122, 123) said usage costs (124, 125, 126) based on said asynchronous usage notifications (151).

2. A method for real-time monitoring of usage of packet-based telecom services according to claim 1, further comprising:
- setting in said client (121, 122, 123) and/or said second server (116) one or more usage thresholds that are independent of a pre-paid or post-paid account.

3. A method for real-time monitoring of usage of packet-based telecom services according to claim 2, wherein said one or more thresholds are user-selectable.

4. A method for real-time monitoring of usage of packet-based telecom services according to claim 2 or claim 3, further comprising:
- controlling uplink usage by said client (121, 122, 123) as soon as said usage costs exceed a first threshold out of said one or more thresholds.

5. A method for real-time monitoring of usage of packet-based telecom services according to claim 2 or claim 3, further comprising:
- controlling downlink usage upon instruction of said client (121, 122, 123) as soon as said usage costs exceed a second threshold out of said one or more thresholds.

6. A method for real-time monitoring of usage of packet-based telecom services according to claim 2 or claim 3, wherein said usage costs are displayed with respect to a third threshold out of said one or more thresholds.

7. A method for real-time monitoring of usage of packet-based telecom services according to any one of the preceding claims, wherein said usage entails usage of packet-based telecom services by plural clients.

8. A method for real-time monitoring of usage of packet-based telecom services according to claim 7, wherein said plural clients form part of:
- a family;
- a company; or
- an organisation.

9. A method for real-time monitoring of usage of packet-based telecom services according to any one of the preceding claims, wherein said usage costs are limited to:
- one or more packet-based telecom services;
- one or more geographic areas;
- one or more access networks;
- one or more accounts; or
- a combination thereof.

10. A method for real-time monitoring of usage of packet-based telecom services according to any one of the preceding claims, wherein said usage costs are expressed in a service-relevant unit.

11. A server (116) enabling real-time monitoring of usage of packet-based telecom services, said server (116) comprising:
- means for communicating rate information to a client (121, 122, 123) thereby enabling said client (121, 122, 123) to estimate usage costs based on local metering and said rate information; and
**CHARACTERIZED IN THAT** said server (116) further comprises:
- means for sending to said client (121, 122, 123) asynchronous usage notifications (151) indicative for network-metered usage of said packet-based telecom services, thereby enabling said client (121, 122, 123) to adapt said usage costs based on said asynchronous usage notifications (151).

12. A client device (121, 122, 123) able to real-time monitor usage of packet-based telecom services, said client device (121, 122, 123) comprising:
- means for receiving rate information from a first server (116);
- means for local metering of usage of said packet-based telecom services;
- means for estimating in said client (121, 122, 123) usage costs based on said local metering and said rate information; and
- means for displaying said usage costs (124, 125, 126),
**CHARACTERIZED IN THAT** said client device (121, 122, 123) further comprises:
- means for receiving from a second server (116) asynchronous usage notifications (151) indicative for network-metered usage of said packet-based telecom services; and
- means for adapting in said client (121, 122, 123) said usage costs (124, 125, 126) based on said asynchronous usage notifications (151).
